# EUROPEAN PATENT APPLICATION

(11) **EP 3 552 815 A1**
(43) Date of publication of application: **16.10.2019**
(21) Application number: 18182881.5
(22) Date of filing: 11.07.2018
(51) Int. Cl.: B32B 5/02, B32B 5/24, B32B 27/06, B32B 27/12, B32B 27/32, B32B 27/40, A41D 31/02

(54) **MULTI-LAYER COMPOSITE FABRIC**

(30) Priority: 10.04.2018 CA 3000716
(71) Applicant: Huang, Sheng-Hung, 725 Tainan City (TW)
(72) Inventor: Huang, Sheng-Hung, 725 Tainan City (TW)
(74) Representative: LLR

(57) **Abstract**

A multi-layer composite fabric has a functional member (10A, 10B, 10C) and at least one protecting member (20A, 20B). The functional member (10A, 10B, 10C) has two sides, a micro-porous membrane (11), a hydrophilic membrane (12), and a fabric material substrate (13). The fabric material substrate (13) is disposed between the micro-porous membrane (11) and the hydrophilic membrane (12). The at least one protecting member (20A, 20B) is selectively disposed on one of the two sides of the functional member (10A, 10B, 10C) for protecting the functional member (10A, 10B, 10C). Each protecting member (20A, 20B) has at least one filtering layer (21). The at least one filtering layer (21) is disposed on the functional member (10A, 10B, 10C) to filter the particulate matter and absorb oil and protect the functional member (10A, 10B, 10C)

## Description

### 1. Field of the Invention

The present invention relates to a multi-layer composite fabric, and more particularly to a multi-layer composite fabric that has a good protection effect and a good isolation effect for blocking the particulate matter.

### 2. Description of Related Art

A structure of a fabric is a single layer. According to the functional requirements, many composite fabrics having different functions are developed. The thermoplastic polyurethane (TPU) membrane is a hydrophilic membrane and has multiple hydrophilic groups to absorb moisture intensively. The TPU membrane has a good moisture diffusion characteristic. The polytetrafluoroethene (PTFE) membrane is a micro-porous membrane and has the effects of water resistance and vapor permeability. Therefore, the TPU membrane and the PTFE membrane are usually applied to the composite fabrics.

The TPU membrane and the PTFE membrane are applied to the composite fabrics for developing the effects of the composite fabrics. The effects of the composite fabrics are reached by the hydrophilic groups of the TPU and the micro-pores on the PTFE membrane. The composite fabrics may be used to produce clothes or sleeping bags. The clothes and the sleeping bags are explosed in the air. Grease in sweat from the human body and the particulate matter may attach to and clog up the micro-pores on the TPU membrane and the PTFE membrane, thereby decreasing the effects of the TPU membrane or the PTFE membrane.

To overcome the above-mentioned shortcomings, the present invention provides a multi-layer composite fabric to mitigate or obviate the aforementioned problems.

The objective of the invention is to provide a multi-layer composite fabric that can filter the particulate matter for keeping the effects of the multi-layer composite fabric.

The multi-layer composite fabric has a functional member and at least one protecting member. The functional member has two sides, a micro-porous membrane, a hydrophilic membrane, and a fabric material substrate. The fabric material substrate is disposed between the micro-porous membrane and the hydrophilic membrane. The at least one protecting member is selectively disposed on one of the two sides of the functional member. Each protecting member has at least one filtering layer. The at least one filtering layer is disposed on the functional member.

Preferably, the at least one filtering layer is a melt-blown nonwoven fabric layer, an electrostatic cotton layer, or a filtering cotton layer. The at least one filtering layer has good filtering effect. Furthermore, the at least one filtering layer is made of a filtering material after special treatment.

Preferably, each protecting member has at least one breathable layer, and the at least one breathable layer is disposed on the at least one filtering layer. Furthermore, the at least one breathable layer is made of a fiber material having good strength and breathability. The at least one breathable layer is a spun bond nonwoven fabric layer or a polyamide fabric layer .

Preferably, the micro-porous membrane is a PTFE membrane, the PTFE membrane comprises a plurality of micro-pores, and a size of each of the micro-pores ranges from 0.1 µm to 0.5 µm. The hydrophilic membrane is a thermoplastic polyurethane (TPU) membrane.

Accordingly, the functional member of the multi-layer composite fabric utilizes the micro-porous membrane and the hydrophilic membrane to enhance water resistance, vapor permeability, and moisture diffusion of the fabric material substrate. The at least one protecting member of the multi-layer composite fabric utilizes the at least one filtering layer to filter the particulate matter and absorb oil. The particulate matter and grease in sweat from the human body may not attach to and may not clog up the micro-porous membrane and the hydrophilic membrane directly. The functionality of the micro-porous membrane and the hydrophilic membrane can be well sustained by the at least one filtering layer.

Furthermore, the multi-layer composite fabric can be used for manufacturing many kinds of products such as bags, clothes, or therapeutic pads. The multi-layer composite fabric can also be reused after treated with a heat reduction process. The heat reduction process means lowering the moisture in the multi-layer composite fabric by sunshine, dryer, or microwave. The objective of the present invention also increases applications with broadened temperature ranges and broadened humidity ranges for the multi-layer composite fabric. The multi-layer composite fabric also can achieve good moisture permeability efficiency and waterproof capability in harsh environments such as severe cold weather or extremely humid surroundings.

Furthermore, the at least one filtering layer of the at least one protecting member has good breathability, good filterability, good barrier property, good heat-insulating property, and good oil absorbency. Moisture can be absorbed by the hydrophilic membrane and then removed out of the fabric material substrate by diffusion and convection. In addition, water droplets cannot pass through the micro-porous membrane to wet the fabric material substrate. The vapor in the fabric material substrate can be dissipated out of the fabric material substrate via the micro-porous membrane. The multi-layer composite fabric combines the advantages of the micro-porous membrane, the hydrophilic membrane, and the at least one filtering layer to make the multi-layer composite fabric have good waterproof effect and good humidity control effect.

The hydrophilic membrane is a thermoplastic polyurethane membrane and has multiple hydrophilic groups to absorb moisture intensively. The micro-porous membrane is a polytetrafluoroethene membrane. The hydrophilic membrane and the micro-porous membrane may be disposed on the fabric material substrate by coating. Or the hydrophilic membrane and the micro-porous membrane may be disposed on the fabric material substrate by sticking after manufacturing the hydrophilic membrane and the micro-porous membrane individually. The way of sticking is not limited. The hydrophilic membrane and the micro-porous membrane may be stuck on the fabric material substrate by resin solution. Moreover, the fabric material substrate is dipped into the resin solution, and then the fabric material substrate is stacked with the hydrophilic membrane and the micro-porous membrane.

The at least one protecting member of the multi-layer composite fabric can protect the functional member for increasing the waterproof and the water resistance and the vapor permeability of the micro-porous membrane, and the moisture diffusion of the hydrophilic membrane. The multi-layer composite fabric has a lasting functional property.

Other objectives, advantages and novel features of the invention will become more apparent from the following detailed description when taken in conjunction with the accompanying drawings.

### BRIEF DESCRIPTION OF THE DRAWINGS

Fig. 1 is a side view of a first embodiment of a multi-layer composite fabric in accordance with the present invention;
Fig. 2 is a side view of a second embodiment of a multi-layer composite fabric in accordance with the present invention;
Fig. 3 is a cross-sectional side view of the multi-layer composite fabric in Fig. 1;
Fig. 4 is an enlarged and exploded perspective view of the multi-layer composite fabric in Fig. 1;
Fig. 5 is a cross-sectional side view of the multi-layer composite fabric in Fig. 2; and
Fig. 6 is a cross-sectional side view of a functional member of a third embodiment of a multi-layer composite fabric in accordance with the present invention.

### DETAILED DESCRIPTION OF PREFERRED EMBODIMENT

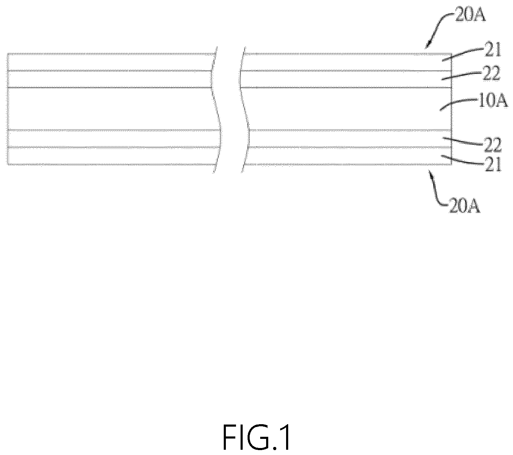

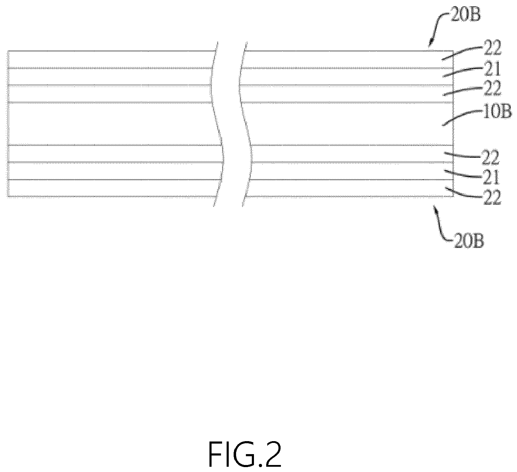

With reference to Figs. 1 and 2, a first embodiment and a second embodiment of a multi-layer composite fabric in accordance with the present invention comprise a functional member 10A, 10B and at least one protecting member 20A, 20B. The multi-layer composite fabric can be utilized on bags, backpacks, or outdoor products such as sleeping bags.

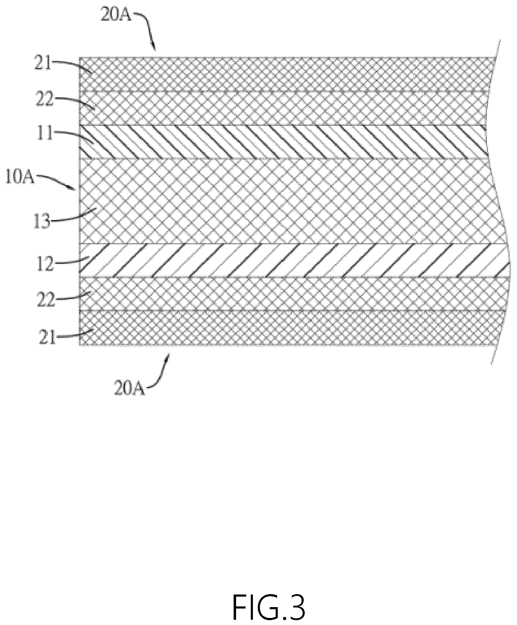

With reference to Figs. 3 to 5, the functional member 10A, 10B has two sides, a micro-porous membrane 11, a hydrophilic membrane 12, and a fabric material substrate 13. The fabric material substrate 13 is disposed between the micro-porous membrane 11 and the hydrophilic membrane 12. The choice of the material of the fabric material substrate 13 does not have special restrictions. The fabric material substrate 13 is made of artificial fibers or natural fibers. The fabric material substrate 13 may be selected from textile fabrics, knitted fabrics, or nonwoven fabrics. The natural fibers can be divided into plant fibers, animal fibers, and mineral fibers, such as asbestos. The common plant fibers are cotton and fibrilia. The common animal fibers are wool, camel' hair, and silk. The types of the artificial fibers are diversified. The artificial fibers can be divided into recycled fibers processed from natural materials, semi synthetic fibers processed from natural fibers, and synthetic fibers processed from petrochemical materials. The kinds of the synthetic fibers are many, and detailed listing thereof is omitted. The best choice of the fabric material substrate 13 is a heat-resisting nonwoven fabric.

With reference to Figs. 3 to 5, the at least one protecting member 20A, 20B is selectively disposed on one of the two sides of the functional member 10A, 10B. Each protecting member 20A, 20B has at least one filtering layer 21 and at least one breathable layer 22. The at least one filtering layer 21 is disposed on the functional member 10A, 10B. The at least one breathable layer 22 is disposed on the at least one filtering layer 21.Furthermore, the at least one filtering layer 21 is indirectly disposed on the functional member 10A, 10B. The at least one filtering layer 21 is made of a breathable material having a good isolation effect.The best choice of the at least one filtering layer 21 is a melt-blown nonwoven fabric layer having good filtering effect.

Fineness of the at least one filtering layer 21 is from 2 µm to 5 µm. The choice of the material of the at least one breathable layer 22 does not have special restrictions. The best choice of the at least one breathable layer 22 is a spun bond nonwoven fabric layer or a polyamide fabric layer. The spun bond nonwoven fabric layer has a good strength and a good breathable effect.

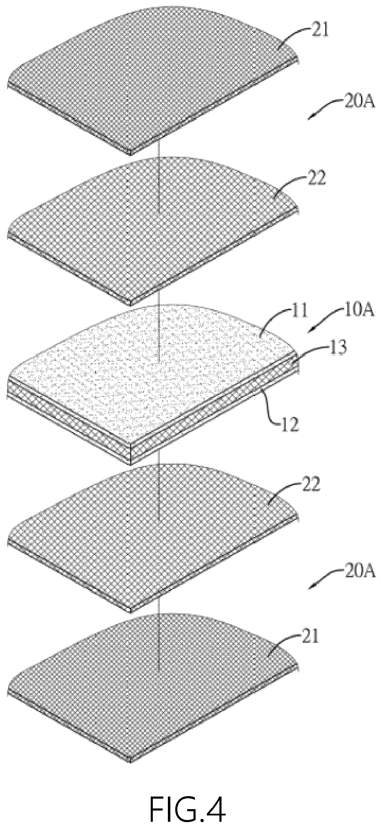

With reference to Figs. 3 and 4, the at least one protecting member 20A includes two protecting members 20A. The protecting members 20A are respectively disposed on the two sides of the functional member 10A and are respectively contacted with the micro-porous membrane 11 and the hydrophilic membrane 12. Each one of the two protecting members 20A has one filtering layer 21 and one breathable layer 22 between the filtering layer 21 and the functional member 10A. The breathable layer 22 can be stacked on any position according to the usage demand.

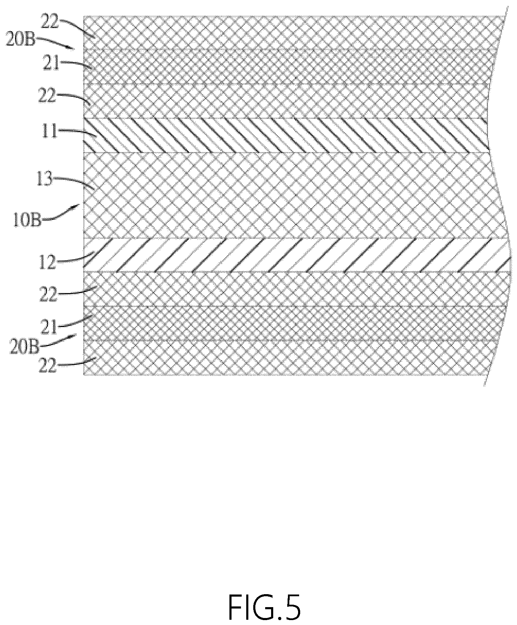

With reference to Fig. 5, the at least one protecting member 20B includes two protecting members 20B. The protecting members 20B are respectively disposed on the two sides of the functional member 10B and are respectively contacted with the micro-porous membrane 11 and the hydrophilic membrane 12. Each one of the two protecting members 20B has two breathable layers 22 and one filtering layer 21 between the two breathable layers 22, and one of the two breathable layers 22 of each protecting member 20B is deposited on one of the micro-porous membrane 11 and the hydrophilic membrane 12.

In addition, according to the usage demand, the numbers of the at least one filtering layer 21 and the at least one breathable layer 22 can be adjusted, and the material in the at least one filtering layer 21 and the at least one breathable layer 22 can be selected suitably.

Furthermore, the micro-porous membrane 11 is coated on the fabric material substrate 13. The micro-porous membrane 11 is a polytetrafluoroethene (PTFE) membrane or a polyethylene (PE) membrane. The best choice of the PTFE has heat resistance about 260 °C.The PTFE membrane comprises a plurality of micro-pores, and a size of each of the micro-pores is from 0.1 µm to 0.5 µm. The size of each of the micro-pores is smaller than a size of a water drop and is larger than a size of a vapor. Under pressure, the water drop cannot pass through the micro-pores by surface tension. Moisture can pass through the micro-pores directly. The PTFE membrane has a good waterproof effect and a good moisture-permeable effect.

The vapor permeability of the micro-porous membrane 11 is about 15000 g/m² per 24 hours. The micro-porous membrane 11 can prevent the vapor from condensing to water. Heat conduction is decreased. Furthermore, the micro-pores of the PTFE membrane are arranged in the form of a spider web. Wind cannot pass through the plurality of micro-pores. The PTFE membrane has wind resistance. The micro-porous membrane 11 also can block bacteria and dust. In addition, the micro-porous membrane 11 can block infrared radiation and ultraviolet radiation from passing through the plurality of micro-pores. The micro-porous membrane 11 also can retain warmth. The micro-porous membrane 11 also can prevent germs, the particulate matter, ultrared rays, and ultraviolet rays effectively.

Furthermore, the hydrophilic membrane 12 is coated on the fabric material substrate 13. The hydrophilic membrane 12 is a thermoplastic polyurethane (TPU) membrane. Heat aging temperature of the TPU membrane is 150 °C. Low resistance temperature of the TPU membrane is -30° C. The TPU membrane has multiple hydrophilic groups. Moisture from the human body can be absorbed by the hydrophilic groups, is carried to the fabric material substrate 13 by diffusion and convection, and then is removed by the micro-porous membrane 11. The hydrophilic membrane 12 has a strong moisture absorption capability. Stacking connecting strength between the hydrophilic membrane 12 and the fabric material substrate 13 is good and strong.

The micro-porous membrane 11 is indirectly connected to the hydrophilic membrane 12. The micro-porous membrane 11 and the hydrophilic membrane 12 are directly connected to the fabric material substrate 13 for solving that a connecting strength between the micro-porous membrane 11 and the hydrophilic membrane 12 directly connected to the micro-porous membrane 11 is insufficient. The fabric material substrate 13 has cushion effect. The combining strength of the functional member is increased by the fabric material substrate 13.

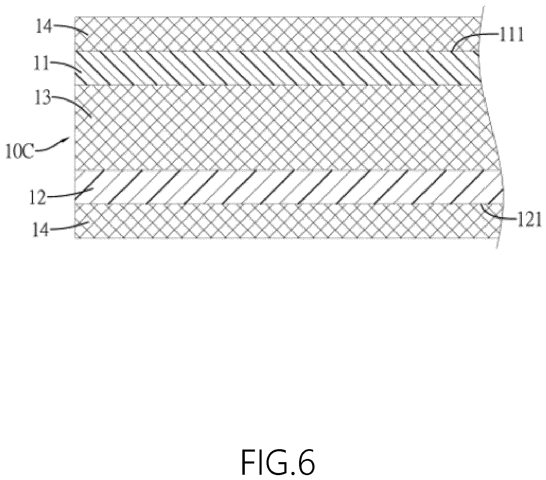

With reference to Fig. 6, the micro-porous membrane 11 comprises a first side 111 away from the fabric material substrate 13. The hydrophilic membrane 12 comprises a second side 121 away from the fabric material substrate 13. The functional member 10C has two fabric material layers 14 mounted on the first side 111 and the second side 121, respectively. The two fabric material layers 14 can enhance the structural strength of the multi-layer composite fabric. The two fabric material layers 14 are made of fiber materials having a good strength and a good breathable effect, such as spun bond nonwoven fabrics or polyamide fabrics. The best choice of the fabric material layers 14 is spun bond nonwoven fabrics. In addition, the two fabric material layers 14 can provide diversification of products for the multi-layer composite fabric by different processing methods.

The multi-layer composite fabric can be utilized on a waterproof bag. The outer surface of the waterproof bag can be covered with the micro-porous membrane 11. Water cannot permeate into the waterproof bag through the micro-porous membrane 11. The inner surface of the waterproof bag can be covered with the hydrophilic membrane 12. Moisture in the waterproof bag can be absorbed by the hydrophilic membrane 12. The moisture can be transported out of the fabric material substrate 13 by the hydrophilic membrane 12 through diffusion and convection progressively. Then vapor induced by the moisture can be transported out of the waterproof bag by the micro-porous membrane 11 via the micro-pores of the PTFE membrane. The waterproof bag can intelligently regulate the moisture or humidity between the outer space of the waterproof bag and the inner space of the waterproof bag smoothly. Change of the moisture or humidity between the outer space of the waterproof bag and the inner space of the waterproof bag is decreased.

The PTFE membrane of the multi-layer composite fabric can prevent water from passing into the inner space of the waterproof bag. The TPU membrane of the multi-layer composite fabric can help remove the moisture and humidity from the inner space of the waterproof bag. The waterproof bag utilizes PTFE membrane's advantages and TPU membrane's advantages simultaneously to retain dryness for the waterproof bag. The multi-layer composite fabric can intelligently adjust humidity on the two sides of the multi-layer composite fabric progressively. The adjustment process is very gentle, avoiding drastic changes in the humidity on the two sides of the multi-layer composite fabric having significant changes within a short time period.

Furthermore, the at least one filtering layer 21 of the at least one protecting member 20A, 20B on the functional member 10A, 10B, 10C can filter the particulate matter and can prevent the particulate matter from attaching to the functional member 10A, 10B, 10C. In addition, the at least one filtering layer 21 of the at least one protecting member 20A, 20B can absorb oil and can prevent grease in sweat from the human body from attaching to the functional member 10A, 10B, 10C. The at least one filtering layer 21 of the at least one protecting member 20A, 20B can prevent the particulate matter and the grease from decreasing the effects of the functional member 10A, 10B, 10C. The functional member 10A, 10B, 10C is prevented by the at least one protecting member 20A, 20B for keeping the waterproof effect and the breathability of the micro-porous membrane 11 and keeping the moisture diffusion characteristic of the hydrophilic membrane 12. The multi-layer composite fabric has a lasting functional property.

In addition, the multi-layer composite fabric can be utilized on therapeutic pads such as underpads. The upper surface of the fabric pad can be covered with the hydrophilic membrane 12. The lower surface of the fabric pad can be covered with the micro-porous membrane 11. When a human lies down on the upper surface of the therapeutic pad, vapor induced by the human body can be absorbed and diffused by the TPU membrane. Then the vapor induced by the human body can be removed out of the therapeutic pad by dissipating via the micro-pores of the PTFE membrane.

The therapeutic pad can keep dry and provide comfort to the human body through the TPU membrane and the PTFE membrane. The therapeutic pad can intelligently regulate the vapor between the human body and the outer space of the therapeutic pad. The TPU membrane of the fabric pad can absorb vapor and help the vapor to diffuse and convect from the upper surface of the therapeutic pad. The PTFE membrane of the fabric pad can remove the vapor through the multiple micro-pores of the PTFE membrane. The therapeutic pad utilizes advantages of both the TPU membrane's and the PTFE membrane simultaneously to retain dryness for the therapeutic pad and maintain health of the human body.

Therefore, the water resistance and the breathability of the multi-layer composite fabric are provided by the micro-porous membrane 11. The hydrophilic membrane 12 provides the moisture diffusion characteristic. The at least one filtering layer 21 provides good breathability, good filterability, good barrier property, good heat-insulating property, and good oil absorbency. The at least one breathable layer 22 provides good breathability, good strength, good wear resistance, and good moisture absorption capacity to the multi-layer composite fabric.

The at least one protecting member 20A, 20B of the multi-layer composite fabric utilizes the at least one filtering layer 21 to filter the particulate matter and absorb oil. The particulate matter and grease in sweat from the human body may not attach to and may not clog up the micro-porous membrane 11 and the hydrophilic membrane 12 directly. The effects of the micro-porous membrane 11 and the hydrophilic membrane 12 can be kept well by the at least one filtering layer 21 of the at least one protecting member 20A, 20B. The lifetime of the multi-layer composite fabric may be prolonged effectively.

Furthermore, the protecting member 20A, 20B may provide good windproof property, good water pressure resistance, good chemical resistance, or good viral resistance. The multi-layer composite fabric combines the advantages of the micro-porous membrane 11, the hydrophilic membrane 12, and the at least one protecting member 20A, 20B. Therefore, the multi-layer composite fabric is versatile in use.

Furthermore, mositure in the multi-layer composite fabric can be decreased by heat treatments for reuse.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A multi-layer composite fabric comprising:
a functional member having
two sides;
a micro-porous membrane;
a hydrophilic membrane; and
a fabric material substrate disposed between the micro-porous membrane and the hydrophilic membrane; and
at least one protecting member selectively disposed on one of the two sides of the functional member, and each protecting member having at least one filtering layer, and the at least one filtering layer disposed on the functional member.

2. The multi-layer composite fabric as claimed in claim 1, wherein the at least one filtering layer is a melt-blown nonwoven fabric layer, an electrostatic cotton layer, or a filtering cotton layer.

3. The multi-layer composite fabric as claimed in claim 1 or 2, wherein each protecting member has at least one breathable layer, and the at least one breathable layer is disposed on the at least one filtering layer.

4. The multi-layer composite fabric as claimed in claim 3, wherein the at least one breathable layer is a spun bond nonwoven fabric layer or a polyamide fabric layer.

5. The multi-layer composite fabric as claimed in any one of claims 1 to 4, wherein the micro-porous membrane is a polytetrafluoroethene (PTFE) membrane or a polyethylene (PE) membrane.

6. The multi-layer composite fabric as claimed in any one of claims 1 to 4, wherein the micro-porous membrane is a PTFE membrane, and the PTFE membrane comprises a plurality of micro-pores, and a size of each of the micro-pores is from 0.1 µm to 0.5 µm.

7. The multi-layer composite fabric as claimed in any one of claims 1 to 6, wherein the hydrophilic membrane is a thermoplastic polyurethane (TPU) membrane.

8. The multi-layer composite fabric as claimed in any one of claims 1 to 7, wherein the micro-porous membrane comprises a first side away from the fabric material substrate, the hydrophilic membrane comprises a second side away from the fabric material substrate, the functional member has two fabric material layers, and the two fabric material layers are mounted on the first side and the second side respectively.
